# EUROPEAN PATENT SPECIFICATION

(11) **EP 0 490 845 B1**
(45) Date of publication and mention of the grant of the patent: **20.03.1996**
(21) Application number: 91850273.3
(22) Date of filing: 07.11.1991
(51) Int. Cl.: H02K 5/132, H02K 7/14, B01F 7/06

(54) **Submersible working machine**
Überflutbare Arbeitsmaschine
Machine immergeable

(30) Priority: 13.12.1990 SE 9003982
(43) Date of publication of application: 17.06.1992
(73) Proprietor: ITT Flygt Aktiebolag, S-171 25 Solna (SE)
(72) Inventor: Fries, Hjalmar, S-163 58 Spanga (SE)
(74) Representative: Larsson, Sten

(56) References cited:
- DE-A- 1 653 726
- DE-A- 2 247 382
- DE-A- 3 843 106
- DE-B- 2 618 161

## Description

The invention concerns a submersible machine such as an electrically driven submersible mixer.

A machine of this type comprises an enclosed electric motor which via a rotary shaft and possibly a gear box drives a propeller which obtains mixing of the surrounding medium. The shaft is normally supported by two ball bearings one on each side of the rotor and is sealed on its way towards the propeller by help of one or several seals which prevent the surrounding medium from entering the motor along the shaft. A mixer of this type is shown in the Swedish Design Registration 33 623.

The enclosure of the motor is normally designed with a gable and a cylinder formed in one piece, while the gable heading the propeller is attached to the cylinder formed part by screws. The enclosure must of course be so rigid that it is able to absorb strong torque and axial forces caused by the rotation of the propeller and its thrust. This means that the bolted joint becomes relatively expensive and in addition takes a lot of axial space.

An example of this is whown in DE-A- 165 3726.

The principles when designing a submersible mixer have up to now not differed very much from these used when designing pumps and other machines. The enclosure of the motor has therefore been designed to be able to stand the whole torque caused by the different forces by connecting the gables of the stator housing by a bolt joint. The torque from the motor shaft is then transmitted via rotor, stator, pump housing and pump impeller to the bearing.

In a submersible mixer however, the torque from the propeller is transmitted via motor shaft, rotor, stator to the rear part of the machine and its attachment. The front bearing, its housing and the front motor gable thus do not have to stand the torque mentioned. With knowledge of that it has, according to the invention, been possible to obtain a solution of the design problem which means a less expensive machine and in addition brings about a reduced diameter machine housing. The characterizing parts are stated in the claim.

The invention is described more clearly below with reference to the enclosed drawing which shows a cut through a mixer according to the invention.

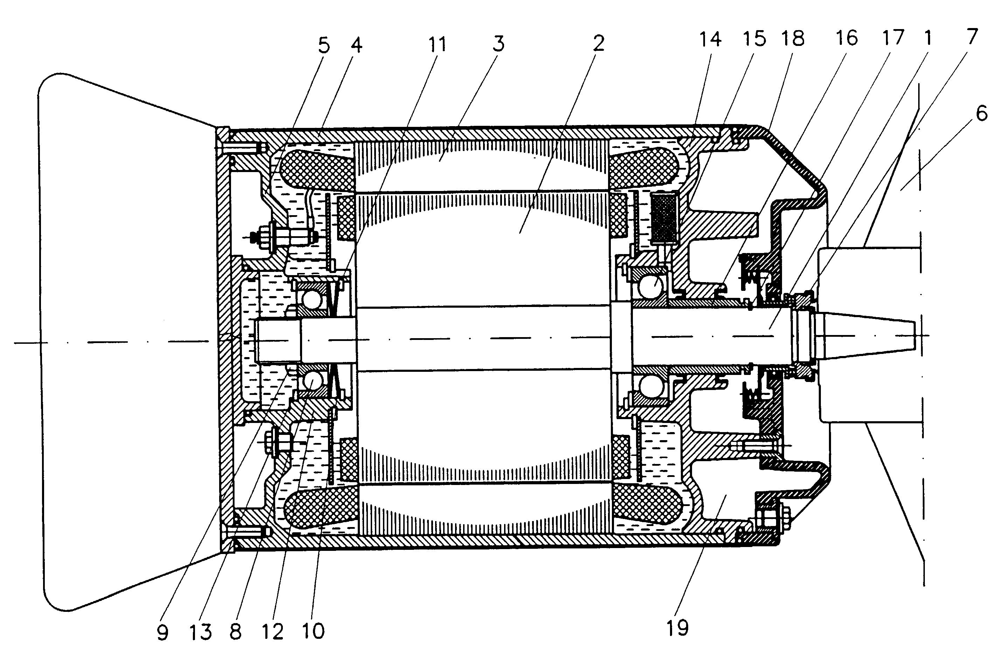

In the drawing 1 stands for a rotary shaft connected to the rotor 2 in an electric motor. The stator is given the reference No 3 and is in its turn surrounded by a stator housing formed by a cylindric part 4 and a gable 5. 6 stands for a propeller on the shaft 1, while 7 stands for an intermediate seal device. 8 stands for a bearing, 9 a locking nut, 10 spring means, 11 a lock ring, 12 a cup formed part of the gable 5 and 13 a seal for another bearing, 16 a socket, 17 another lock ring, 18 a cap and 19 a seal room.

The device according to the invention is thus meant to operate entirely submersed in the medium that should be treated. Sometimes the mixer shall operate very deep in a liquid which means that the enclosure must stand a very strong static pressure. The enclosure must thus be absolutely seal proof.

In order to obtain a design which will not be deformed the stator housing, which forms the enclosure for the main part of the driving unit, is designed as a rigid construction preferably made of cast iron. The cylindric part 4 and the gable 5 are then manufactured in one piece. The gable 5 also supports the bearing 8.

The bearing 8 which is of a type that stands axial forces in one direction, is attached to the shaft 1 and is brought into the central part of the gable 5. Said central part is designed like a cup 12. The bearing is entered so far that its outer ring is moved behind a lock ring 13 in the cup 12, thus causing the cup to surround the outer ring with some play. Springs, such as one or several cup springs 10, are mounted in the cylindric part of the cup 12. The springs 10 are supported by a lock ring 11 in the cup on the side of the bearing 8 that is turned away from the end of the shaft.

A nut 9 is screwed into the end of the shaft into contact with the inner ring of the bearing. As the nut is screwed further inwards, the bearing will be moved against the force of the springs 10. This movement goes on until the contact between the outer ring of the bearing and the lock ring is somewhat relieved. In this position the bearing 8 and the shaft 1 are floatingly supported in the stator housing 4,5 and prestressed by a dominating axial force.

The spring arrangement may alternatively be arranged on the shaft between the unit and the bearing, the shaft then being allowed to slide axially in the inner ring of the bearing.

According to a special arrangement the construction is given such resilience that the demand for springs is eliminated.

The attachment of the bearing support 14 for the other bearing 15 may then be very simple as it only has to stand axial forces from the propeller and the prestressed spring 11. These forces act in the same direction. Thus the bearing is attached at a shoulder on the shaft 1 by help of a socket 16, which in its turn is locked on the shaft by a lock ring 17. The circumference of the bearing support 14 is sealed against the cylindric part 4 by O-rings with no demand for screws or the like.

The mechanical seal 7 is connected to a room 19 adjacent the bearing support 14 which preferably contains oil for lubricating and cooling of the seal surfaces. The room 19 is limited by a gable cap 18 connected to the circumference of the support 14.

By help of the invention is obtained a non-expensive and simple design which simultaneously offers a rigid attachment of the machine parts into the enclosure. Further advantages are the lack of the conventional gable heading the propeller which means a more slim design. In addition the resilient attachment of the bearing 8 in the stator housing means that the bearing are pressed away from the propeller in their unitial positions already. This means that there is no play which may cause leakage when the machine starts and stops.

## Claims

1. A submersible machine comprising an enclosed electric motor, a rotary part such as a propeller and a connecting driving shaft, characterized in that the end of the driving shaft (1) turned away from the propeller (6) is axially resiliently supported in a stator housing (4, 5) surrounding the motor/that the gable (5) of the stator housing in its central part is designed like a cup (12) having its opening turned towards the end of the shaft, said shaft and its bearing (8) being brought into said opening and that a spring means (10) is arranged between the bearing (8) and a lock ring (11) or seat in the cylindric part of the cup (12) said means (10) pressing the shaft (1) and the bearing (8) in the direction of the gable (5).

## Patentansprüche

1. Tauch-Maschine, umfassend einen eingeschlossenen Elektromotor, ein Drehteil wie z. B. einen Propeller, und eine angeschlossene Antriebswelle, dadurch gekennzeichnet, daß das von dem Propeller (6) abgewandte Ende der Antriebswelle (1) axial nachgiebig in einem Statorgehäuse (4, 5) gelagert ist, welches den Motor umgibt, daß der Giebel (5) des Statorgehäuses in seinem Mittelteil wie ein Becher (12) ausgebildet ist, dessen Öffnung dem Ende der Welle zugewandt ist, die Welle und ihr Lager (8) in die Öffnung eingebracht sind, und daß eine Federanordnung (10) zwischen dem Lager (8) und einem Haltering (11) oder Sitz in dein zylindrischen Teil des Bechers (12) angeordnet ist, wobei die Anordnung (10) die Welle (1) und das Lager (8) in Richtung des Giebels (5) drückt.

## Revendications

1. Machine submersible comprenant un moteur électrique enfermé, une partie rotative telle qu'une hélice et un arbre d'entraînement de liaison, caractérisée en ce que l'extrémité de l'arbre d'entraînement (1) tournée à l'opposé de l'hélice (6) est supportée axialement de manière élastique dans un logement de stator (4, 5) entourant le moteur, que la paroi amont (5) du logement de stator, dans sa partie centrale, est conçue comme une coupelle (12) ayant son ouverture tournée vers l'extrémité de l'arbre, ledit arbre et son palier (8) étant amenés dans ladite ouverture et que des moyens à ressort (10) sont agencés entre le palier (8) et une bague (11) de blocage ou siège dans la partie cylindrique de la coupelle (12), lesdits moyens (10) pressant l'arbre (1) et le palier (8) dans la direction de la paroi amont (5).
